# EUROPÄISCHE PATENTSCHRIFT

(11) **EP 2 697 850 B1**
(45) Veröffentlichungstag und Bekanntmachung des Hinweises auf die Patenterteilung: **05.04.2017**
(21) Anmeldenummer: 12726729.2
(22) Anmeldetag: 12.04.2012
(51) Int. Cl.: H01M 2/18, B23K 26/00, H01M 4/13, H01M 10/0525, H01M 10/0569, H01M 4/02, H01M 4/04

(54) **ÜBER VERBESSERUNGEN AN ELEKTROLYT-BATTERIEN**
ON IMPROVEMENTS IN ELECTROLYTE BATTERIES
PERFECTIONNEMENTS AUX BATTERIES À ÉLECTROLYTE

(30) Priorität: 14.04.2011 DE 102011017058; 20.04.2011 DE 102011018373; 21.04.2011 DE 102011018616
(43) Veröffentlichungstag der Anmeldung: 19.02.2014
(73) Patentinhaber: Karlsruher Institut für Technologie, 76131 Karlsruhe (DE)
(72) Erfinder: PFLEGING, Wilhelm, 76646 Bruchsal (DE); KOHLER, Robert, 76297 Stutensee (DE); PRÖLL, Johannes, 76185 Karlsruhe (DE)
(74) Vertreter: Vossius & Partner Patentanwälte Rechtsanwälte mbB
(86) Internationale Anmeldenummer: PCT/DE2012/000383
(87) Internationale Veröffentlichungsnummer: WO 2012/139553

(56) Entgegenhaltungen:
- EP-A1- 0 967 672
- JP-A- 2002 015 764
- JP-A- 2003 197 265
- US-A1- 2010 279 158
- US-A1- 2011 039 140

## Beschreibung

Die vorliegende Erfindung betriff das oberbegrifflich Beanspruchte und bezieht sich somit auf das Gebiet der Energiespeicher.

Um mobile elektrische Geräte, Maschinen und Fahrzeuge mit elektrischer Energie gut versorgen zu können, sind leistungsfähige Energiespeicher erforderlich. Die Anforderungen an derartige Energiespeicher wachsen dabei mit dem Wunsch, neue Anwendungen eröffnen zu können oder leistungsfähigere Vorrichtungen bereitstellen zu können, beispielsweise für Elektro-/Hybridfahirzeuge. Bei Energiespeichern handelt es sich typisch um wiederaufladbare Batterien, die auch als Akkumulatoren oder als Sekundärzellen bezeichnet werden.

Prinzipiell bestehen Batterien aus zwei unterschiedlichen Elektroden, zwischen welchen sich ein Elektrolyt befindet. Bei Lithium-Ionen-Batterien wird beispielsweise eine Elektrode nämlich die negative, aus Graphit gebildet, während die positive Elektrode aus Lithium-Metalloxid gebildet werden kann. Im Regelfall ist es gewünscht, dauerhaft große Ströme aus einem Energiespeicher entnehmen zu können. Um dies zu gewährleisten, werden die Elektroden dünn ausgebildet und dicht beieinander angeordnet. Zwischen den Elektroden befindet sich dabei gerade bei besonders kompakten Batterien mit geringem Elektrodenabstand ein für die Ionen des Elektrolyten durchlässiger elektrisch isolierender Separator, durch den interne Kurzschlüsse vermieden werden.

Um eine dünne Elektrode bilden zu können, ist es bereits bekannt, das Elektrodenausgangs-material in Pulverform bereit zu stellen und die Elektrode aus diesem Ausgangsmaterial mittels Foliengießen herzustellen. Foliengießen ist ein Urformverfahren zur Herstellung dünner, großflächiger Keramikfolien, bei welchem das hier lithiumhaltige - Keramikpulver mit Hinfe von geeigneten Substanzen und Additiven zu einem fließfähigen Gießschlicker verarbeitet wird. In einer Foliengießanlage kann dieser Keramikschlieker beispielsweise auf eine dutchlaufende Metallfolie aufgetragen und kontinuierlich unter einer Rakel glattgestrichen werden. Die so erhaltene Schlickerschicht kann getrocknet und weiterverarbeitet werden.

Ein Vorteil derartiger Elektroden ist die hohe Porosität, die nach dem Befüllen mit einem Elektrolyten zu geringen maximalen Diffusionswegen der Ladungsträger vom Elektrodenmaterial in den Elektrolyten führt und damit ein schnelles Laden und Entladen der Batterie ermöglicht.

Es ist bereits vorgeschlagen worden, Elektrodendünnschiehten, beispielsweise Schichten mit Dicken unter 5 µm, wie sie durch HF-Magnetron-Sputtern herstellbar sind, zur Verbesserung der elektrochemischen Eigenschaften einer Batterie, in der entsprechende Elektroden verwendet werden, mittels kurzer UV Laserpulse zu strukturieren. Dabei wurden zusätzliche konusförmige Poren in das Material eingebracht. Die dabei erzielte Verbesserung der elektrochemischen Batterieeigenschaften durch solche kompakten Dünnsrhichten wird darauf zurückgeführt, dass die Diffusionswege der Lithiumionen durch das Material hin zum Elektrolyt auf Grund der Laserstrukturierung verkürzt werden, was ein schnelleres Laden beziehungsweise Entladen der Batteriezelle ermöglichen soll.

In der Literatur wird auch die Vergrößerung der Oberflächen von Dünnschichtelektroden zur Verbesserung der Batteneeigenschaften unter dem Stichwort der sogenannten "dreidimensionalen Batterie" erörtert. Dabei wurde auch schon eine Vorstrukturierung des Substrats und die anschließende Abscheidung von Elektroden auf den erzeugten Substratstrukturen untersucht. Verwiesen sei beispielsweise auf den Übersichtsartikel "Three-dimensional Battery Architectures" von J. W. LONG et al, Chem. Ref. 2004,104, 4463-4492 Verwiesen sei hinsichtlich der erwähnten, bekannten Techniken zunächst auf den Aufsatz "Läser annealing of textured thin film cathode material for lithium ion batteries" von R. KOHLER et al, Laser-based Micro- and Nano-Packaging and Assembly IV, Proceedings of SPIE, Volume 7585; S. 75850O-11. Weiter sei verwiesen auf den Aufsatz "Laser-assisted structuring and modification of LiCoO2 thin films" von R. KOHLER et al, Proceedings of the SPIE (2009), Volume 7202, S. 720207-720207-11, sowie auf den Aufsatz "Patterning and annealing of nano-crystalline LiCoO2 thin films" von R KOHLER et al, Journal of Optoelectronics and Advanced Materials, Volume 12, No. 3, März 2010, Seiten 547-552.

Was Folien für elektrochemische Bauelemente sowie Verfahren für deren Herstellung angeht, sei nur beispielhaft verwiesen auf die EP 1 230 708 B1.

Es sei weiter verwiesen auf die DE 699 27 556 T2 sowie auf die Aufsätze "High Energy Density All-Solid-State Batteries: A Challenging Concept towards 3D Integration" von LOIC BAGGETTO et al, Advanced Functiotial Materials 18 (2008),1057-1066, sowie auf den Aufsatz "Nanomaterials for rechargeable lithium batteries" von P. G. BRUCE et al, Angewandte Chemie-International Edition, 2008, 47(16), S. 2930-2946, und den Aufsatz "3D Micro Batteries" von R. W. HART et al, Electrochemistry Cammunications 5 (2003), S. 120-123.

Ein Problem gerade bei leistungsfähigen Energiespeichern entsteht nun bei der Herstellung der Zelle. Hierbei muss gewährleistet werden, dass der Elektrolyt gleichmäßig zwischen die Elektroden gelangt. Ist dies nicht gewährleistet, verteilt sich der Elektrolyt also während der Zellmontage ungleichmäßig, können die nicht vom Elektrolyten benetzten Flächen der Elektrode nicht für die Speicherung von elektrischer Ladung genutzt werden; die Zelle erreicht nicht die spezifizierte Kapazität und kann frühzeitig ausfallen. Die Erzielung einer gleichmäßigen Elektrolytverteilung während der Zellherstellung stellt damit einen qualitätsentscheidenden Prozessschritt dar. Aus diesem Grund wird das Befüllen der Zelle nach dem Stand der Technik in einem Verfahren durchgeführt, welches eine mehrfache Befüllung mit abwechselnder Herstellung eines Vakuums im Raum zwischen der Zellverpackung und dem Elektrodenstapel sowie eine anschließende mehrstündige Auslagerung vorsieht. Dieser Vorgang ist äußerst zeitaufwändig, mit verschiedenen manuellen Arbeitsschritten verbunden und daher kostenintensiv.

Wünschenswert ist es, die Eigenschaften einer Batterie ver-bessern zu können, insbesondere dann, wenn großflächige, gering beabstandete Elemente in die Batterie eingesetzt werden, die mit Elektrolyt in Kontakt kommen. Insbesondere, jedoch nicht ausschließlich, ist es wunschenswert, Eigenschaften von Elektroden aus pulverförmigem Material und/oder mit einer Dicke des aktiven Materials über 10 µm zu verbessern.

Aus der US 2005/0053833 A1 ist eine nichtwässrige Elektrolytbatterie bekannt, deren Elektrodenanordnung eine positive Elektrode mit hoher Dichte aufweist, wobei das positive Elektrodenmaterial auf zumindest einer Oberfläche des positiven Elektrodenstromkollektors gebildet ist, und wobei ein Separator zwischen den positiven und negativen Elektroden vorgesehen ist, und wobei eine Struktur gebildet ist, in welcher die Elektrodenanordnung mit einem niehtwässrigen Elektrolyt gebildet ist, wobei die spezifische Oberfläche pro Flächeneinheit der Schicht aktiven Materials der aktiven Materialschicht der positiven. Elektrode 0,5 bis 1,0 mal so groß ist wie die spezifische Oberfläche pro Flächeneinheit der aktiven Materialschicht der negativen Elektrode, welche der positiven Elektrode mit dazwischen angeordneten Separator gegenüberliegt.

Aus der DE 103 43 535 C5 ist ein Separator für Lithium-Polymer-Batterien mit einer profilietten Oberfläche bekannt, wobei der Separator 10 bis 40 µm dick ist und die profilierte Oberfläche eine Profiltiefe von 3 bis 5 µm hat.

Aus der DE 10 2006 035 468 A1 ist es bekannt, modifizierte Elektroden für elektrische Energiespeicher vorzusehen, insbesondere für Lithium-Ionen-Batterien, die eine strukturierte Oberfläche aufweisen. Dabei soll eine Kathodenelektrode strukturiert ausgeführt werder wobei diese Strukturierung bei der Herstellung in einem Laminator zeitgleich erfolgt. Es wenden Kapillaren erzeugt. Bei einem Befüllen der Zellen sollen diese Kapillaren den Elektrolyten bedingt durch ihre Kapillarwirkung in die Mitte der aufgewickelten Kathoden-Elektroden weiterleiten, das heißt in die Mitte der Zelle. Dadurch ist das Befüllen, der Lithium-Ionen-Zellen in einem einzigen Schritt möglich.

Eine Strukturienung von Elektrolytbatteriekomponenten ist auch aus der EP 0 967 672 A1, der US 2010/279 158 A1 sowie der US 2011 /0391140 A1 belkannt.

Die Aufgabe der vorliegenden Erfindung besteht darin, Neues für die gewerbliche Anwen dung bereitzustellen. Bevorzugte Ausführungsformen finden sich in den Unteransprüchen.

Die vorliegende Erfindung befasst sich demnach auch mit Herstellungsverfahren, die sich vorteilhaft auf die Befüllung, Assemblierung und Performance von Elektrolytbatterien auswirken, insbesondere durch die Einbringung von Fluidleitstrukturen für die homogene und reproduzierbare Zellbefüllung, wobei erwähnt sei, dass die Strukturierung von porösen pulverförmigen Elektrodenmaterialien die Zyklenstabilität der Elektrolytbatterie insbesondere bei hohen Lade- und Entladeraten verbessert sowie die Zell-Lebensdauer durch Einbringung von Elektrolytreservoirs steigert.
Vorliegend wird dabei zunächst eine Elektrolytbatteriekomponente mit einer Oberfläche beschrieben, an welcher in der Batterie Elektrolyt ansteht und welche mit einer Oberflächenstruktur versehen ist. Hierbei ist vorgesehen, dass die Oberfläche mit einer Fluidleitstruktur versehen ist, um den Elektrolytfluidtransport bei der Zellbefüllung zu beschleunigen. So wird zudem die Zuverlässigkeit erhöht, da die gesamte Fläche der Elektrode vom Elektrolyt benetzt wird.
Noch genauer wird gemäß einem ersten Grundgedanken der Erfindung eine Elektrolytbatterie-Elektrodenkomponente mit einer Schicht, an deren Oberfläche in der Batterie Elektrolyt ansteht und welche mit einer Fluidleit-Kanal-Struktur versehen ist, vorgeschlagen, dass die Fluidleitstruktur mit Kanälen gebildet ist, die weit eingetieft sind, das heißt wenigstens über 50 %, bevorzugt wenigstens zwei Drittel, insbesondere bevorzugt zumindest 75 % der Dicke der aktiven Schicht bis zu einem Substratträger, beziehungsweise mit Kanaltiefen im Bereich von 10 bis 200 µm.

Es wird also erfindungsgemäß eine Fluidleitstruktur auf der Oberfläche geschaffen, durch welche sich eine schnellere, großflächigere und homogenere Benetzung der Elektroden beziehungsweise des Raumes zwischen Elektrode und Separator mit dem Elektrolyten bereits beim Befüllen der Zelle mit dem flüssigen Elektrolyten ergibt. Die Vorteile können bereits dann erreicht werden, wenn eine von Elektrode oder Separator erfindungsgemäß so strukturiert ist, dass sich über die Kapillarkräfte und die Benetzungseigenschaften (durch angepasste Oberflächenenergie) ein beschleunigter Flüssigkeitstransport entlang der Fluidleitstrukturen und in die angrenzenden Porositäten des Elektrodenmaterials beziehungsweise des Separators ergibt. Die erfindungsgemäße Strukturierung schafft so nicht nur die Voraussetzung für eine schnelle Benetzung, was zu einer Reduzierung der für die Batterieherstellung erforderlichen Prozesszeiten durch Verringerung der sogenannten Batterieauslagerungszeiten beiträgt, sondern erzielt durch die homogenere Benetzung, die erfindungsgemäß ermöglicht wird, auch eine dauerhafte Verbesserung der Batterieleistungsfähigkeit und somit eine Verlängerung der Lebensdauer, weil trockene Zellbereiche vermieden werden. Es werden also trotz der Verkürzung der im Stand der Technik erforderlichen mehrstündigen Auslagerung zur Benetzungshomogenisierung Leistungsverbesserungen mit der Erfindung durch geeignete Geometriewahl für die Oberflächenstruktur erzielt.

In praktischen Versuchen haben sich Mikrokanalstrukturen mit Kanalbreiten beziehungsweise -tiefen im Bereich von 10 bis 200 µm in Verbindung mit den heute verwendeten Flüssigelektrolyten als besonders vorteilhaft herausgestellt. Typisch werden auf einer großflächigen Elektrolytbatteriekomponente nach der Erfindung eine Vielzahl von Fluidleitstrukturen wie Mikrokanalstrukturen vorgesehen sein. Der Abstand dieser Kanäle oder dergleichen muss nicht zwingend exakt äquidistant sein; er wird bevorzugt im Bereich weniger Mikrometer bis einiger Millimeter liegen. Sind die Abstände zu groß, ergeben sich die andernfalls möglichen erfindungsgemäßen Vorteile nicht in der gewünschten und möglichen Stärke und Ausprägung. Sind die Abstände zu gering, können sich unter anderem mechanische Instabilitäten im Laufe der Bearbeitung negativ auswirken. Es hat sich im Übrigen in praktischen Versuchen mit üblichen Elektrolyten, welche Ethylencarbonat und Dimethylcarbonat im Verhältnis 1:1 als Lösungsmittel sowie LiPF₆ als Leitsalz benutzt haben, gezeigt, dass für Kanalbreiten im Elektrodenmaterial kleiner beziehungsweise gleich 50 µm durch die flüssigkeitsführenden Strukturen ein Maximum erzielbarer Steighöhen erzielt wird. Es wird aber einzuschätzen sein, dass sich womöglich abhängig von Oberflächeneigenschaften der Separatoren beziehungsweise Elektroden, sowie der Eigenschaften der verwendeten Elektrolyte unterschiedliche Auslegungen als jeweils besonders vorteilhaft erweisen können. Als bevorzugt sind, insbesondere auch vor diesem Hintergrund, aber Kanalbreiten bis oder unter 100 µm anzusehen, weiter bevorzugt bis oder unter 80 µm, insbesondere bevorzugt bis oder unter 60 µm. Es sei daher auf die Möglichkeit hingewiesen, vorteilhafte Dimensionierungen durch Steighöhenbestimmungen für gegebene Oberflächen-Elektrolyt-Paarungen zu bestimmen.

Die erfindungsgemäße tiefe Profilierung verbessert auch gegenüber den im Stand der Technik bereits bekannten Strukturen die Befüllung und erspart in besonderem Maß die zeitintensive Temperierung der Zellen, die sonst eventuell zur Homogenisierung der Elektrolytbenetzung in der Elektrode durch Herabsetzung der Elektrolytviskositäten erforderlich ist. Zudem wird das Oberflächen-zu-Volumen-Verhältnis des aktiven Materials erhöht und die Grenzfläche zwischen Elektrolyt und aktivem Material so vergrößert, dass sich die elektrochemische Zyklierbarkeit der Zellen insbesondere bei hohen Lade-Entlade-Strömen verbessert.

Die erfindungsgemäße Verbesserung ist womöglich auch darauf zurückzuführen, dass bei der elektrochemischen Zyklierung eine Fest-Flüssig-Phase (Solid Electrolyt Interface, SEI) gebildet wird, die zu Elektrolytverlusten führen kann. Die tiefen Fluidleitstrukturen der vorliegenden Erfindung können die dadurch bedingten Elektrolytverluste zumindest partiell ausgleichen, indem sie ein Elektrolytreservoir nahe eines größeren Volumenanteils der aktiven Materialschicht bereitstellen und gegebenenfalls auch im laufenden Betrieb eine Verteilung von Elektrolyt, das aus einem materialfernen Reservoir an die aktive Schicht nachströmt, besser erlauben.

Es lassen sich zudem durch eine erfindungsgemäße Ausbildung Lade- und Entladeraten erzielen, die bei gleicher Lebensdauer der Zelle höher sind. Zudem ist auch die Gefahr verringert, dass die Zelle insgesamt ausfällt, weil sich die in Elektrodenmaterialien in Folge der Li-Einlagerungs-/-Auslagerungs-prozesse auftretenden mechanischen Spannungen, welche zu einer Ausdehnung beziehungsweise Schrumpfung des aktiven Materials beim Laden beziehungsweise Entladen führen, verringern lassen. Die verringerten mechanischen Spannungen, die auf Grund der tieferen Kanäle geringer sind, führen zu einer verringerten Wahrscheinlichkeit, dass sich Schichtmaterial vom Stromableiter ablöst, und führen zu einer reduzierten Bildung und reduzierten Ausbreitung von Rissen innerhalb der Elektrodenschicht, wobei die reduzierten Risslängen vorteilhaft sind, weil Risse die elektrischen Leitpfade zwischen den aktiven Partikeln der Elektrodenschicht unterbrechen und somit extrem ungünstig für den Zellbetrieb sind. Es hat sich herausgestellt, dass sich ungeachtet der tiefen Strukturierungen ein insoweit verbessertes Verhalten einstellt, weil Risse oftmals oben liegende Bereiche der aktiven Schicht von der effektiven elektrischen Verbindung zum Stromableiter abtrennen. Da Risse zudem zu neuen Kontaktflächen zwischen Festkörper und Elektrolyt führen, was die Bildung der Fest-Flüssig-Phase und somit den unerwünschten Verbrauch von Elektrolyt und aktivem Material begünstigt, wirken die tiefen Fluidleitstrukturen der vorliegenden Erfindung insoweit gegen negative Effekte doppelt, als einerseits die Rissbildung verringert ist und andererseits, wie erwähnt, ein Elektrolytreservoir vorgesehen wird, so dass die unerwünschte sukzessiver Erhöhung des Innenwiderstandes nicht, jedenfalls nicht so schnell und nicht im wie im Stand der Technik bekannten Umfang auftritt, wodurch auch erhöhte thermische Belastungen der Zelle nicht, zumindest nicht im gewohnten Umfang zu berücksichtigen sind und einem thermischen Weglaufen entgegengewirkt wird. Damit verbessert die tiefe Strukturierung der vorliegenden Erfindung auch die Zellsicherheit.

Es sei offenbart, dass gegebenenfalls die Einbringung hierarchischer Strukturen vorteilhaft sein kann, zumal durch solche die erwünschte schnellere Lithium-Ein- und -Auslagerung aus dem Schichtmaterial und der Transport von Lithium in und aus tieferen Elektrodenschichten verbessert wird, was die Lithiumdiffusion effektiv verbessert, weil die erforderlichen Diffusionsweglängen verkürzt sind und die Lithiumdiffusionsquerschnitte vergrößert werden.

Es sei hier darauf hingewiesen, dass es zwar besonders einfach ist, als Fluidleitstrukturen parallele Kanäle vorzusehen, insbesondere dann, wenn nach der Strukturierung noch eine Zerteilung erfolgt, um aus einem großen Stück des strukturierten Materials eine Vielzahl unabhängig verwendbarer Elektrolytbatteriekomponenten zu erzeugen, dass aber auch Geometrien wie Netzstrukturen, Verästelungen oder Gitterstrukturen verwendet werden können, um eine homogene Benetzung zu erzielen.

Es ist demnach bevorzugt, wenn eine Vielzahl von Kanälen nebeneinander oder eine sich verästelnde Struktur und/oder eine säulenartige Struktur für die tiefen Fluidleitstrukturen der Erfindung vorgesehen ist. Dies ist vorteilhaft, weil typisch eine Injektion des Elektrolyten von einem Punkt beziehungsweise einer Kante her erfolgt, und nicht etwa eine flächige Elektrolytbefüllung vorgenommen wird. Eine aderartige Verästelung der Fluidleitstrukturen, beispielsweise gemäß eines Blattaderstrukturdesigns, verbessert die Elektrolythomogenisierung in der Elektrode sowohl vertikal als auch lateral zur Befüllrichtung selbst bei nahezu punktförmiger Injektion. Es sei erwähnt, dass auch solche Strukturen ohne weiteres eingebracht werden können, beispielsweise durch Prägewalzen oder Laserstrukturierung.

Es sei aber darauf hingewiesen, dass sich die vorliegende Erfindung nicht auf rein aderartige Designs der Fluidleitstrukturen beschränkt. Vielmehr sind jedwede hierarchische Strukturen vorteilhaft und gegebenenfalls bevorzugt.

Es wird also eine Homogenisierung der Flüssigkeitsverteilung über Kapillarkräfte und dergleichen gezielt einstellbar durch Variation der Strukturgeometrien. Dass eine intrinsische Porosität von Elektroden und Separatormaterial eine Verteilung des die Oberfläche homogen schnell benetzenden Elektrolyts über die gesamte Materialdicke zu unterstützen vermag, sei im Übrigen erwähnt.

Es ist insbesondere bevorzugt, wenn unterschiedliche Strukturgeometrien der Gruppe: Kanalstrukturen im Elektrodenmaterial; oberflächennahe Säulenstrukturen; konische Oberflächenstrukturen auf der Elektrodenoberfläche; Mikroporen in der Elektrodenoberfläche; kombiniert werden, das heißt mindestens zwei Elemente dieser Gruppe durch gezielte Strukturierung gemeinsam vorgesehen werden. Die Kanalstrukturen sind dabei, wie erwähnt, vorteilhaft, weil sie eine schnelle und homogene Benetzung der Elektroden ermöglichen und als Elektrolytreservoir dienen sowie mikroskopisch auftretende mechanische Spannungen wie während des Lade-Entlade-Zyklus, durch den Montageprozess, durch Transport oder im Betrieb, wie durch Vibrationen bedingt, kompensieren. Die konischen Oberflächenstrukturen verbessern oberflächennah die Elektrolytbenetzung weiter. Säulenstrukturen werden bevorzugt, weil sie durch die mikroskopischen Abmessungen mit bevorzugten Breiten von 1 bis 10 µm für die Säulen und den bevorzugten typischen hohen Aspektverhältnissen von 1 bis 100 besonders geeignet sind, kurzfristige Stromspitzen beim Laden oder Entladen zu ermöglichen. Die mikroskopischen Strukturen unterbinden zudem die Rissausbreitung besonders effizient und sind geeignet, kritische mechanische Spannungen auch auf der Mikroskala zu kompensieren. Durch Kombination mindestens zweier Elemente der vorgenannten Gruppe, bevorzugt aller Komponenten, sind die diskutierten Vorteile typisch gemeinsam zu erhalten. So ist es beispielsweise möglich, kanalförmige Fluidleitstrukturen, auch mit einer sich aderartig von einem breiteren Kanal hin zu schmaleren Kanälen verästelnden Fluidleitstruktur, mit Mikrostrukturen zu überlagern, die oberflächennah konische Strukturen vorsehen, Säulen einzubringen und gegebenenfalls eine Mikroporosität zu erzeugen. Mikroporen können dabei als weitere Elektrolytspeicher innerhalb des Elektrodenmaterials dienen, was eine kontinuierliche Förderung von frischem Elektrolyt an die elektrochemischen Reaktionsgrenzflächen zwischen Festkörper und Elektrolyt gewährleistet. Die Mikroporen werden typisch mit Durchmessern zwischen 500 nm und 10 µm und Tiefen von 3 µm bis 100 µm eingebracht. Dass sie zusätzlich den Befüllvorgang und die Benetzung verbessern, sei erwähnt.

Die vorliegende Erfindung ist besonders vorteilhaft für Batterien, die bei besonders niedrigen Temperaturen eingesetzt werden sollen. Insbesondere ist die Erfindung einsetzbar für Elektrodenkomponenten beziehungsweise Elektrolytbatterien, die bei Temperaturen unterhalb -5 °C, bevorzugt -20 °C verwendet werden sollen beziehungsweise spezifiziert werden müssen. Bei derart tiefen Temperaturen vermag die Erfindung effektiv der Verschlechterung der Performance-Eigenschaften durch Veränderungen des flüssigen Elektrolyten wie hinsichtlich des Anstiegs der Viskosität, der geringeren Beweglichkeit der Lithium-Ionen und der schlechteren Leitfähigkeit entgegen zu wirken. Die vorgeschlagene tiefe Strukturierung wirkt dem besonders effizient entgegen, zumal die Gefahr der Abscheidung metallischen Lithiums auf der Anode in Folge ungenügend schneller Aufnahme des Lithiums von der Anodenkristallstruktur deutlich vermindert wird. Hier wirkt sich besonders effizient aus, dass und wenn die Strukturen tief in das Material hinein gehen, so dass eben nicht nur eine Verbesserung der Benetzung während des Befüllens erreichbar ist, sondern auch ein Materialaustausch in und aus der aktiven Schicht signifikant begünstigt ist.

In einer besonders bevorzugten Variante werden die Schichtdicken des aktiven Elektrodenmaterials, in welches die tiefen Fluidleitstrukturen der vorliegenden Erfindung eingebracht werden, zwischen 30 und 150 µm betragen. Besonders bevorzugt ist es, wenn die Schichtdicken des aktiven Elektrodenmaterials zwischen 40 und 120 µm betragen. Diese Dicken lassen sich gut fertigungstechnisch erzeugen und sind geeignet, Elektrolytbatterien mit typisch gewünschten Eigenschaften zu erzeugen. In Elektrodenschichten derartiger Dicke werden dann die Fluidleitstrukturen eingebracht, die typisch 70 bis 100 % der Elektrodenschichtdicken betragen. Wird als Maß für die bei Herstellung der Gesamtbatterie erzielbare Benetzung die maximale Steighöhe der Elektrolytflüssigkeit in den strukturierten Elektroden herangezogen, so zeigt sich, dass bei schmalen Kanälen eine Verbesserung der Steighöhe zu beobachten ist, die sich mit der Abtragtiefe erhöht, während bei breiteren Kanälen die Steighöhe bis etwa 70 % linear ansteigt und danach der weitere Anstieg der Steighöhe mit der Abtragtiefe abflacht. Durch eine derartige Bestimmung des Steighöhenverhaltens ist es ohne weiteres möglich, für gegebene Kombinationen aus Kanalbreiten und Materialdicken optimale KanalTiefen zu bestimmen, das heißt Tiefen, die für eine Benetzung optimal sind. Dass tiefere Strukturen vorteilhaft sein können, auch wenn die Steighöhe durch weitere Eintiefung kaum noch signifikant steigt, sei erwähnt. Hier ist dann unter anderem beachtlich, dass bei der Benetzung weitere positive Effekte auftreten; gleiches gilt auch für die Kanalbreiten von bevorzugt bis oder unter 100 µm, insbesondere bevorzugt bis oder unter 80 µm, beziehungsweise noch weiter bevorzugt bis oder unter 60 µm. Je nach gewünschtem Effekt beziehungsweise gewünschter Effektkombination können unterschiedliche Kanalbreiten gewählt werden.

Dass es besonders bevorzugt ist, Schichtdicken > 10 µm zu verwenden, sei insoweit erwähnt.

Die vorliegende Erfindung ist auch für Elektrolytbatterien besonders vorteilhaft, die eine obere (Spannungs-) Abschaltgrenze besitzen, die aus Sicherheitsgründen strikt eingehalten werden muss. So ist es in der Automobilindustrie für bestimmte Anwendungen erforderlich, zur Vermeidung der Überladung der Zelle bei einer bestimmten Lade-Spannung (wie 4,2 Volt für Batterien mit Li₂MnO₄ als Kathodenmaterial) abzuschalten. Dieses Material weist aber charakteristische Ladespannungsplateaus bei 4,05 Volt und 4,15 Volt auf, weshalb durch Zyklierung und Degradation bedingte Verschiebungen dieser Spannungsplateaus zu höheren Spannungen hin die Einsatzzeit der Zelle verkürzt. Durch die erfindungsgemäße Strukturierung kann somit auch unter Einhaltung der systemrelevanten Rahmenbedingungen eine höhere Zyklenzahl für die Zellen verwendet werden. Dies gilt insbesondere, wenn mit erhöhten Laderaten geladen werden soll. Hier kann es im Stand der Technik passieren, dass das obere Spannungsplateau sich von 4,15 Volt so weit nach oben verschoben hat, dass es bei Ladung mit maximal 4,2 Volt nicht mehr benutzt werden kann. Die Materialcharakteristik sowie die Lade-Entlade-Spannung wird somit erfindungsgemäß nur durch die tiefere Strukturierung ebenfalls signifikant verbessert.

Es sei erwähnt, dass es sich bei der Elektrolytbatteriekomponente gemäß der vorliegenden Erfindung bevorzugt µm einen Separator oder eine Elektrode, insbesondere eine Kathode wie eine Dünnschicht- und/oder pulverbasierte Elektrode handeln kann, insbesondere aus zumindest einem von LiNi_{1/3}Mn_{1/3}Co_{1/3}O₂, LiCoO₂, LiMn₂O₄, LiFePO₄, Graphit, sowie entsprechende Materialien mit Dotierungen.

Insbesondere ist es möglich, eine dünnschicht- und/oder pulverbasierte Elektrode erfindungsgemäß zu strukturieren. Nach derzeitigen, jedoch nicht beschränkenden Erkenntnissen eignen sich als Elektrodenmaterialien pulverbasierter Elektroden für eine erfindungsgemäße Strukturierung insbesondere Li-Ni_{1/3}Mn_{1/3}Co_{1/3}O₂, LiCoO₂, LiMn₂O₄, LiFePO₄, Graphit, sowie entsprechende Materialien mit Dotierungen.

Dass auch Anoden und/oder Separatoren strukturierbar sind, sei erwähnt. Es ist insbesondere möglich, Separatoren mit Strukturierung zusätzlich zu Kathoden und/oder Anoden vorzusehen, wobei die Anoden oder Kathoden mit einer erfindungsgemäßen Tiefenstrukturierung vorgesehen sind, während Separatoren nicht zwingend sehr tief mit Fluidleitstrukturen strukturiert vorgesehen werden.

Schutz wird auch beansprucht für eine Elektrolytbatterie mit einer Komponente gemäß der Erfindung.

Dass die erfindungsgemäße Elektrolytbatterie typisch einen wasserfreien Elektrolyten aufweisen wird, insbesondere mit einem Lithiumsalz als Leitsalz, das heißt, dass es sich bevorzugt um eine Lithiumionenbatterie handelt, wobei als Leitsalz insbesondere LiPF₆ in Frage kommt, sei erwähnt. Als bevorzugtes Lösungsmittel für eine Elektrolytbatterie der Erfindung kann Ethylencarbonat und/oder Dimethylcarbonat, insbesondere im Verhältnis von oder nahe 1:1 verwendet werden. Dass durch die Angabe des Lösungsmittels, welches sich in praktischen Versuchen als zur Verwendung mit der Erfindung geeignet herausgestellt hat, genauso wenig eine Beschränkung der Offenbarung auf nur diese Substanzen beabsichtigt ist wie durch die Angabe eines bevorzugten Leitsalzes, insbesondere eines bevorzugten Lithiumsalzes, sei erwähnt. Es sei vielmehr darauf hingewiesen, dass die Erfindung mit einer Vielzahl unterschiedlicher Leitsalze, insbesondere unterschiedlicher Lithiumsalze und/oder unterschiedlicher Lösungsmittel beziehungsweise Lösungsmittelgemische einsetzbar ist, wie diese im Stand der Technik, insbesondere in Lehrbüchern, bereits beschrieben sind.

Es ist einsichtig, dass die erfindungsgemäßen Elektrolytbatteriekomponenten insbesondere in großflächigen Batterien Vorteile bieten, wie sie derzeit unter Verwendung gegossener Folien hergestellt werden. Schutz wird aber auch für jedwede anderen Elektrolytbatterien beansprucht, welche eine erfindungsgemäße Elektrolytbatteriekomponente umfassen. Besonders vorteilhaft ist es, wenn es sich bei der Elektrolytbatterie um eine Lithiumionenbatterie handelt, für die pulverförmige Elektrodenmaterialien eingesetzt werden.

Als Anwendungen von Elektrolytbatterien, in denen derartige Elektrodenmaterialien auf Pulverbasis verwendet werden, seien stationäre Energiespeicher und EV- beziehungsweise HEV-Energiespeicher für zukünftige Automobile erwähnt. Die hier vorgeschlagene Strukturierung ist besonders vorteilhaft für derartige Batterien, weil dort besonders große Elektrolytbatteriekomponentenflächen strukturiert werden müssen und sich die erfindungsgemäßen Fluidleitstrukturen problemfrei auf große Flächen mit sehr hoher Prozessgeschwindigkeit aufbringen lassen.

Erwähnt sei auch, dass die vorliegende Erfindung sich eignet, die Oberflächen mit den Strukturen zu passivieren. Die Passivierung kann parallel mit der Strukturierung erfolgen oder in einem nachgeschalteten Bearbeitungsschritt. Zur Passivierung können insbesondere keramische Oxide, wie Ito, Zinkoxide usw. eingesetzt werden, durch welche die Grenzfläche zwischen Aktivmaterial und flüssigem Elektrolyt optimiert werden kann; es wird quasi eine künstliche Aktivmaterial-Elektrolyt-Grenzfläche gebildet. Die mit der Erfindung mögliche Passivierung reduziert die chemische Degradation der Elektrolytbatterie und verbessert damit die bereits erwähnten Vorteile weiter. Es ist bevorzugt, die Elektrolytbatteriekomponente der Erfindung durch Kalandrieren, Prägen oder mittels Laser vorzunehmen.

Für die direkte Strukturierung von Elektroden beziehungsweise Separatoren können dabei beispielsweise als Laserstrahlenquellen eingesetzt werden Festkörperlaser wie Yb:YAG-Laser oder Nd:YAG-Laser und/oder hochfrequente Ultrakurzpulslaser. Dass unter Verwendung entsprechender Elektrolytbatteriekomponenten Testzellen und Pouchzellen herstellbar waren, die in Batterietests reproduzierbar zu guten Ergebnissen geführt haben, sei insoweit erwähnt.

Es sei erwähnt, dass bei Laserstrukturierung einerseits eine Strukturierung mittels UV-Laserstrahlung und andererseits beispielsweise mittels NIR-Festkörperlasern möglich ist. Dass mittels UV-Laserstrahlung sowohl Dünnschichtmaterialien wie auch pulverbasierte Materialien strukturierbar sind, sei erwähnt.

Weiter sei erwähnt, dass durch den Einsatz gepulster Festkörperlaser, insbesondere von Faserlasern wie Yb:YAG mit einer Wellenlänge um 1 µm, bei Bearbeitung des pulverförmigen Elektrodenmaterials im Fokus einer Fokussierlinse ein definierter Materialabtrag erfolgt. Dabei hat sich gezeigt, dass während des Laserabtragprozesses auf der bearbeiteten Materialoberfläche kaum Debrisablagerungen entstehen, so dass unstrukturierte Materialbereiche weitestgehend unbeeinflusst bleiben.

Als besonders überraschend muss diesbezüglich die Verbesserung der Zyklenstabilität auch bei Verwendung poröser pulverförmiger Elektrodenmaterialien durch einen gezielten Materialabtrag wie mittels Yb:YAG-Laserstrahlung angesehen werden.

Die unmittelbare Laserstrukturierung wird dabei bevorzugt kurz nach der Bildung der Elektrodenmaterialschicht durchgeführt, weil durch die Laserstrukturierung die Trocknung des Elektrodenmaterials begünstigt wird und somit die gegebenenfalls trotzdem nachgeschalteten konventionellen Elektrodentrocknungsschritte zu reduzierten Kosten durchgeführt werden können. Einerseits wird durch die Laserstrukturierung Energie in das Material eingetragen, wobei der Energieeintrag abhängig von der Laserpulsdauer, der Pulsfrequenz, der Pulsenergiedichte und der Wellenlänge ist. Die Strukturierung begünstigt überdies den Wasseraustrag aus dem Material sowie gegebenenfalls die Entfernung von Lösungsmittelrückständen aus dem Elektrodenmaterial, weil auch bei der Trocknung die Diffusion begünstigt wird, was wiederum insgesamt Kosten einspart.

Obwohl die direkte Strukturierung durch Strahlungsquellen wie Laserstrahlen demnach möglich ist und mit hoher Prozessgeschwindigkeit durchgeführt werden kann, weil auf Grund der heute erzielbaren hohen Pulsraten von gepulsten Lasern sehr hohe Scangeschwindigkeiten bei der Strukturierung der Materialoberfläche möglich sind, wenn die beispielsweise stegförmigen Oberflächenstrukturen mittels Laser erzeugt werden, wobei sich zeigt, dass bei dieser Bearbeitung die Pulverform des Materials erhalten bleibt und durch die Strukturierung an den Flanken der erzeugten Kanalstrukturen zusätzlich weitere Agglomerate bis auf das Substrat hin freigelegt werden, die mit dem Elektrolyten als Ionenleiter direkt in Kontakt treten können, sei erwähnt, dass auch andere Strukturierungsverfahren möglich sind.

So kann erfindungsgemäß insbesondere eine Strukturierung des bereits flächig verteilten Elektrodenmaterials durch Kalandrieren vorgenommen werden. Die beim Kalandrierprozess durchgeführte Materialverdichtung ist bereits Bestandteil des Herstellungsverfahrens von großflächigen Elektroden. Besonders vorteilhaft kann dieser Prozess nun erfindungsgemäß beispielsweise durch eine strukturierte Kalanderwalze erfolgen, wobei die Kalanderwalzenstrukturen Linienstrukturen umfassen können, welche durch den Kalandrierprozess auf die Elektrodenoberfläche übertragen werden. Damit könnte in ein und demselben Prozessschritt Verdichtung und Strukturierung des Materials erfolgen.

Die für die Strukturübertragung mittels der Kalanderwalze im Kalandrierprozess erforderlichen Negativstrukturen werden also bevorzugt in der Kalanderwalze selbst vorgesehen. Dass zum Beispiel auch Prägeverfahren möglich wären, sei erwähnt. Diese können zusätzlich zu oder an Stelle einer anderen Strukturierungsmethode angewandt werden.

Neben Schutz für Elektrolytbatteriekomponenten und diese verwendende Zellen und Elektrolytbatterien damit wird auch Schutz für ein Verfahren zur Herstellung von Elektrolytbatteriekomponenten beansprucht, bei welchem eine Elektrolytfluidleitstruktur bevorzugt durch Strukturierung mittels einer Kalanderwalze und/oder mittels eines Prägeverfahrens und/oder mittels Laser aufgebracht wird.

Es sei erwähnt, dass die Erfindung insbesondere Vorteile bietet, wenn sie für großflächige Batterien eingesetzt wird, wie sie zur Zeit durch konventionelles Foliengießen hergestellt werden, wobei durch die erfindungsgemäße Strukturierung, insbesondere Laserstrukturierung, eine Eigenschaftsverbesserung möglich ist. Es sei auch erwähnt, dass die Benutzungsverbesserung von Elektrodenmaterialien für Batterien wie Lithiumionenbatterien sich durch Oberflächenstrukturen sowohl mit Kanälen wie auch gegebenenfalls mit entsprechend angeordneten und geformten Säulen verbessern lässt, wobei eine direkte Strukturierung pulverförmigen Elektrodenmaterials möglich ist.

Die Erfindung wird im Folgenden nur beispielsweise anhand der Zeichnung erläutert. In dieser ist dargestellt durch:
- Fig. 1:: eine schematische Darstellung einer strukturierten Elektrode;
- Fig. 2:: Elektrodenmaterial, wobei dargestellt ist links: unstrukturiertes Elektrodenmaterial, rechts: strukturierte Elektrode mit Ausschnittsvergrößerung (unten);
- Fig. 3:: schematische Darstellung der Elektrolytverteilung nach Elektrpolytauftropfen links: auf einer unstrukturierten Elektrode nach dem Stand der Technik und rechts: auf einer erfindungsgemäß strukturierten Elektrode;

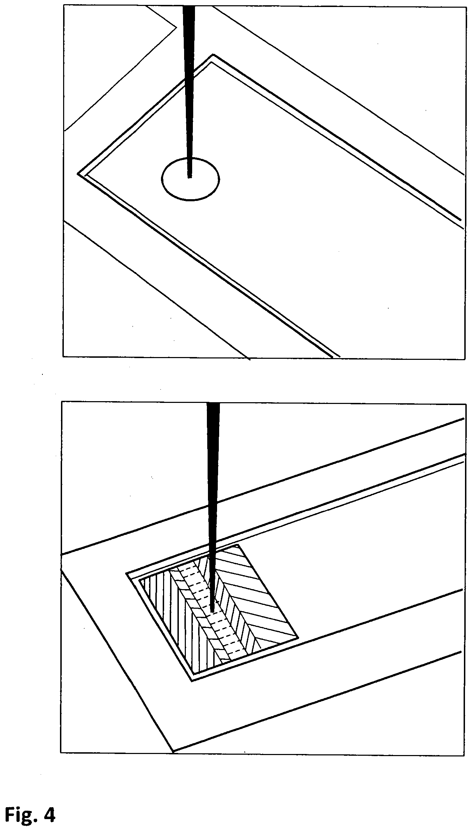

- Fig. 4:: die Verteilung von Elektrolytflüssigkeit unmittelbar nach Aufgabe eines Tropfens Elektrolytflüssigkeit auf die Oberfläche links: einer unstrukturierten Elektrodenoberfläche nach dem Stand der Technik, rechts: einer strukturierter Elektrodenoberfläche entsprechend dem Schema von Fig. 3;
- Fig. 5a:: die Steighöhe eines Elektrolyts auf einer Elektrodenoberfläche in Abhängigkeit von der Kanalbreite einer in gegossenes Elektrodenmaterial eingebrachten Struktur;
- Fig. 5b:: die Abbildung von Fig. 5a mit Steighöhen für unterschiedlich tief eingearbeitete Kanäle und Kanalbreiten von 100µm (Fig. 5c) bzw. 45µm (Fig. 5d);
- Fig. 5c,d:: relative Steighöhen für unterschiedliche Abtragtiefen bei unterschiedlich breiten Kanälen;

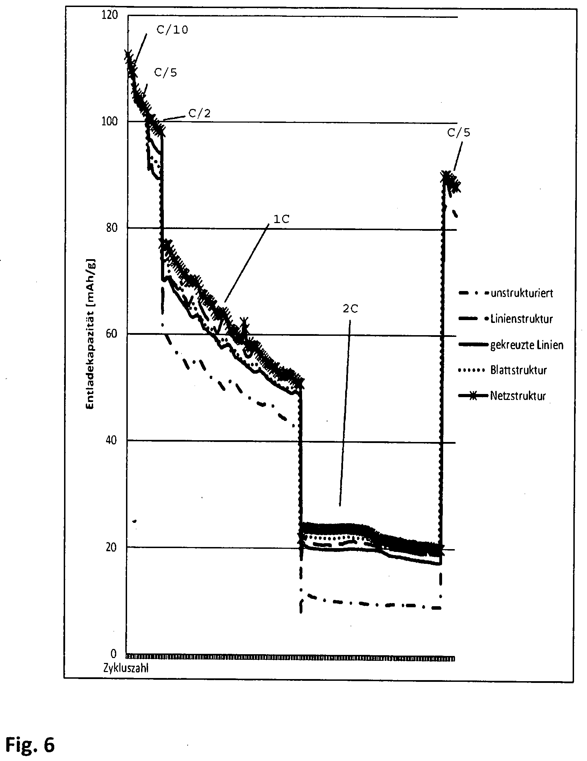

- Fig. 6:: Entladekapazität in mAh/g in Abhängigkeit von der Zyklenzahl für verschiedene Fluidleitstrukturen.
- Fig. 7:: Elektrolytverteilung bei punktueller Zufuhr in einer hierarchische Blattader-Kanal-Anordnung.

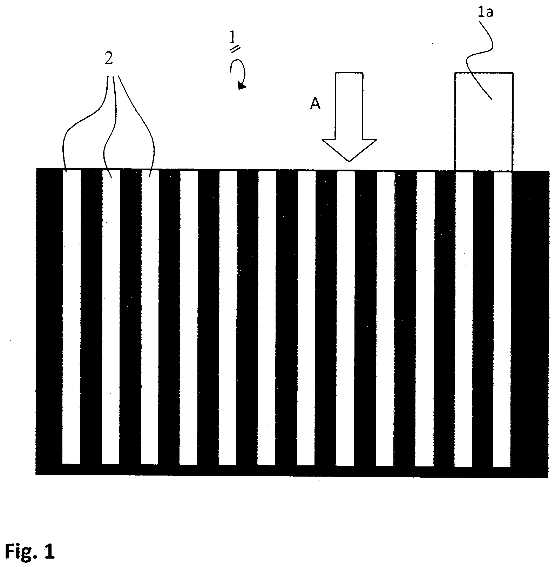

In Fig. 1 ist eine allgemein mit 1 bezeichnete Elektrolytbatteriekomponente 1 als für eine Elektrolytbatterie bestimmte Elektrode aus pulverförmigem Material durch ein per se bekanntes Foliengussverfahren gebildet. Die Oberfläche der Elektrolytbatteriekomponente 2 ist mit einer Oberflächenstruktur 2 versehen, welche als Fluidleitstruktur bei Befüllung einer Elektrolytbatteriezelle mit flüssigem Elektrolyt während der Batterieherstellung den Elektrolytfluidtransport von der in der Zeichnung oben befindlichen Einfüllstelle, markiert durch Pfeil A, zu beschleunigen vermag.

Im vorliegenden Fall handelt es sich bei der Elektrode 1 demnach um eine pulverbasierte Elektrode, wobei als Pulver beispielsweise verwendbar ist eines von LiNi_{1/3}Mn_{1/3}Co_{1/3}O₂, LiCoO₂, LiMn₂O₄, LiFePO₄, Graphit, sowie entsprechende Materialien mit Dotierungen. Das Schichtmaterial ist auf einem Substratträger angeordnet, der in per se bekannter Weise einen Stromableiter 1a aufweist.

Als flüssiges Elektrolyt der Lithiumionenbatterie kann ein Elektrolyt mit einem Lithiumsalz als Leitsalz, insbesondere LiPF₆ und einem Lösungsmittel auf Basis von Ethylencarbonat und Dimethylcarbonat im Verhältnis 1:1 verwendet werden. Mit Ausnahme der erfindungsgemäßen Kanalstrukturen in der Elektrode und, gegebenenfalls entsprechenden Kanalstrukturen in Elektroden und gegebenenfalls auch in den erfindungsgemäß strukturierten Separatoren (nicht gezeigt) ist eine Batterie, die mit Elektrode 1 gebildet wird, ansonsten herkömmlich und weder hinsichtlich der Elektrodenmaterialien noch hinsichtlich des Elektrolyten auf die beispielhaft angegebenen Substanzen beschränkt.

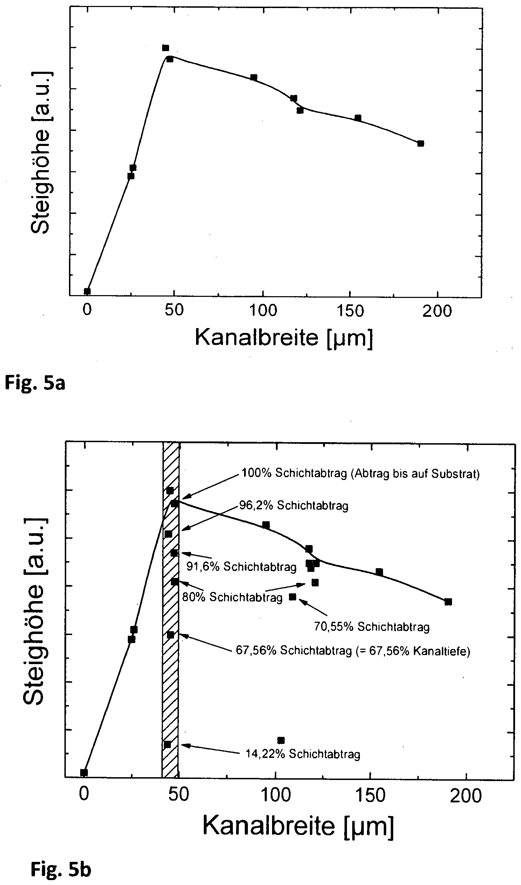

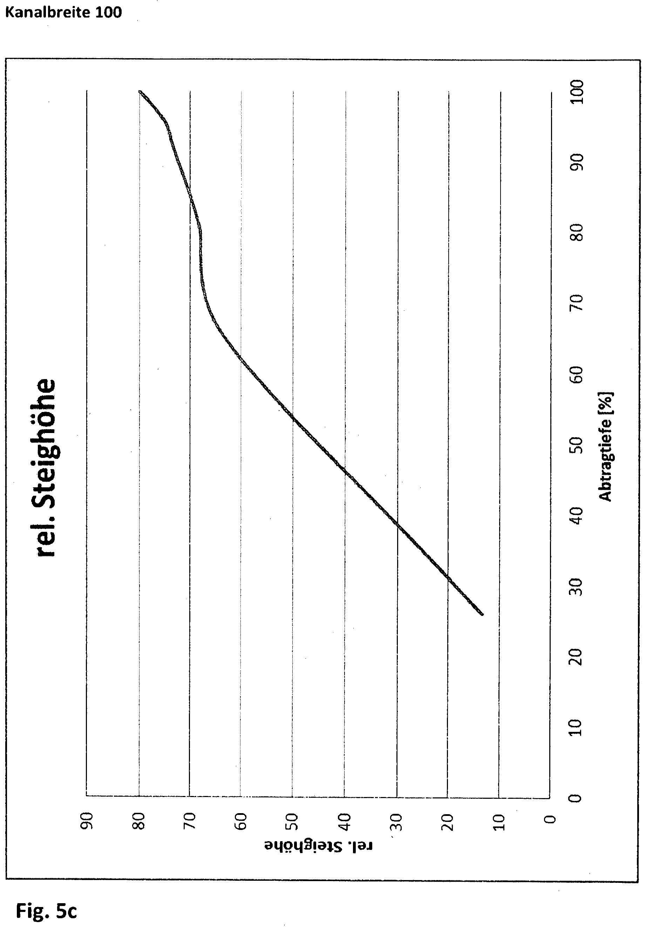

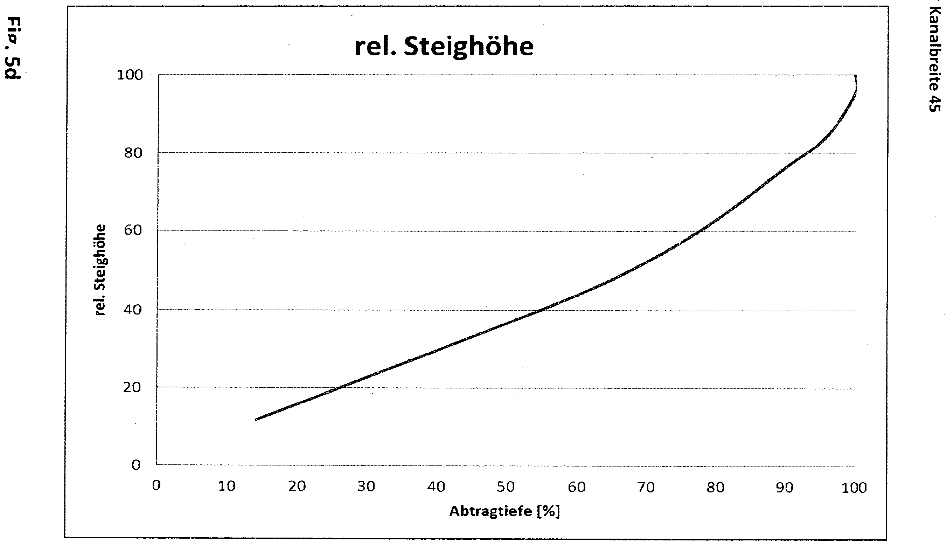

Die in Fig. 1 nur schematisch angedeuteten Kanalstrukturen haben, wie mit Bezug auf Fig. 5 noch erläutert werden wird, bevorzugt eine Breite zwischen 40 und 150 µm, ohne auf exakt diese Werte beschränkt zu sein.

Die in die per se herkömmlich hergestellten Elektroden erfindungsgemäß eingebrachten Fluidleitstrukturen der Erfindung werden im dargestellten Ausführungsbeispiel durch Bestrahlung mit einem gepulsten Yb:YAG-Festkörper-Faserlaser geeigneter Energie und mit einer Laserwellenlänge um 1 µm erzeugt, wobei eine so hohe Scangeschwindigkeit des Laserstrahls über die Elektrodenoberfläche gewählt wird, dass sich im Fokus der Fokussierlinse des Festkörper-Faserlasers ein definierter Materialabtrag ergibt.

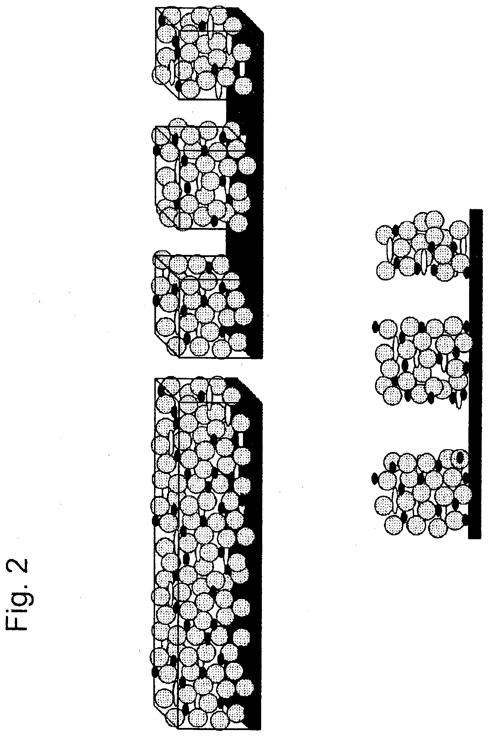

Fig. 2 zeigt zunächst eine elektronenmikroskopische Aufnahme des unstrukturierten Elektrodenmaterials im Vergleich zu der Oberfläche eines mit den erfindungsgemäßen Fluidleitstrukturen versehenen Elektrodenoberfläche. Es zeigt sich, dass während des Laserabtragprozesses kaum Debris-Ablagerungen auf der Materialoberfläche entstehen, so dass es möglich ist, unstrukturierte Materialbereiche weitgehend unbeeinflusst zu belassen.

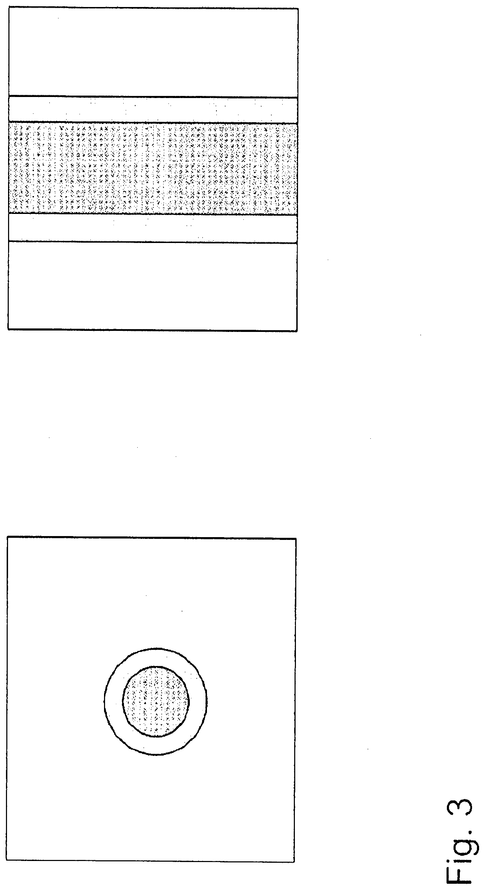

Eine Elektrode, in welcher eine erfindungsgemäße Fluidleitstruktur wie beschrieben eingebracht wird, sei nun verglichen mit einer Elektrode, welche nicht mit einer Fluidleitstruktur der vorliegenden Erfindung versehen ist. Für den Vergleich wird herkömmliches Elektrolyt, wie es für Lithiumionenbatterien verwendet wird und wie vorstehend angegeben, auf Elektroden aufgetropft und die Verteilung des Fluids auf der Elektrode während des Aufbringens beziehungsweise unmittelbar danach beobachtet. Das entsprechende Ergebnis ist schematisch in Fig. 3 dargestellt.

Der Vergleich des Auftropfens auf eine Elektrode mit der erfindungsgemäßen Fluidleitstruktur und einer unstrukturierten Elektrode zeigt, dass die erfindungsgemäße Fluidleitstruktur hier in Form von Kanalstrukturen auf die Elektrolytverteilung die Wirkung hat, dass ein Flüssigkeitstransport entlang der Kanalstrukturen erfolgt, und zwar, im Vergleich zur Verteilung auf einer nichtstrukturierten Elektrodenoberfläche, sehr schnell, wobei einerseits eine schnelle und andererseits überdies eine homogenere Benetzung der Elektrode mit flüssigem Elektrolyt beobachtet werden kann.

In der Praxis zeigt sich hinsichtlich des in Fig. 3 zur verbesserten Erkennbarkeit nur schematisch dargestellten Sachverhalts, dass bei Benetzungsversuchen von Elektrodenmaterial mit einem bestimmten Tropfvolumen eines Elektrolyts unmittelbar nach Tropfenbeaufschlagung der Elektroden, dass - wie zum Beispiel durch fotografische Aufnahmen nachweisbar- die Tropfenbeaufschlagung auf einer erfindungsgemäß mit einer Fluidleitstruktur versehenen Elektrode zu einer wesentlich gleichmäßigeren und schnelleren Benetzung führt als auf einer unstrukturierten Elektrode.

Um zu quantifizieren, welche Kanalbreiten sich als besonders vorteilhaft herausstellen, wurden dann in Elektrodenmaterialproben Kanäle unterschiedlicher Breiten als Fluidleitstrukturen eingebracht und die Steighöhe des vorerwähnten Elektrolyts in einer gegebenen begrenzten Zeit bestimmt. Die erzielbare Steighöhe in Abhängigkeit von der Kanalbreite ist in Fig. 5 dargestellt. Es zeigt sich, dass im Bereich um 50 µm Kanalbreite eine maximale Steighöhe erreicht wird, also ein besonders vorteilhaftes Fluidleitverhalten erzielt wird.

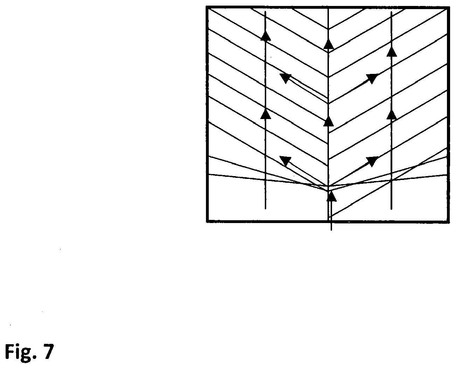

Zugleich kann quantifiziert werden, dass besonders große Steighöhen erreicht werden, wenn die aktive Elektrodenschicht tief strukturiert, das heißt gegebenenfalls weitgehend oder vollständig abgetragen wird. Dies ist in den Fig. 5b, 5c 5d für eine Schichtdicke des aktiven Elektrodenmaterials an 100 µm dargestellt. Zu erkennen ist einerseits, dass die zur Erzielung einer ausreichenden Steighöhe bei typischen Elektrolytflüssigkeiten und den damit einhergehenden Viskositäten eine Kanalbreite von zumindest etwa 35 bis 40 µm bevorzugt nicht wesentlich unterschritten werden sollte. Es ist überdies aus Fig. 5a, in der einzelne Punkte für unterschiedlich tiefen Schichtabtrag eingetragen sind, ersichtlich, dass ein großer relativer Schichtabtrag, das heißt insbesondere ein Abtrag bis auf das Substrat, zu besonders großen Steighöhen führt, während nur geringe Steighöhen bei geringerem Schichtabtrag erreicht werden. Dies ist mit den entsprechenden Daten in den Fig. 5c und 5d für unterschiedliche Kanalbreitenbereiche von einerseits ca. 100 µm bzw. andererseits ca. 45 µm Kanalbreite dargestellt. Während es hinsichtlich der Fluidverteilung bevorzugt ist, Kanalbreiten zwischen ab etwa 35 bis 60 µm zu wählen, können größere Kanalbreiten durchaus sinnvoll sein. Diese erhöhen einerseits das Reservoir an im Betrieb der Zelle zur Verfügung stehendem Elektrolyt und sie sind überdies dann vorteilhaft, wenn eine hierarchische Strukturierung bzw. eine aderartige Fluidleitstruktur gewählt wird. Ein Beispiel hierfür ist in Fig. 7 dargestellt, wobei die Pfeile die Fluidverteilung weg von einer Einfüll- bzw. Auftropfstelle verdeutlichen.

Es sei erwähnt, dass die Fluidleitstrukturen im Elektrodenmaterial, das für die Erstellung von Fig. 5 untersucht wurde, durch Kalandrieren hergestellt wurden, wobei eine Fertigungssequenz gewählt wurde, bei der nach einem ersten Antrocknen zur Entfernung organischer, vergleichsweise leicht flüchtiger Lösungsmittel kalandriert wurde und anschließend nachgetrocknet wurde, um Wasser zu entfernen. Die Porosität des untersuchten LiMn₂O₄-Materials lag bei rund 20 %.

Es wurden dann Versuche mit unterschiedlichen Fluidleitstrukturen unternommen, wie in Fig. 8 dargestellt. In Fig. 8 ist dargestellt die Entladekapazität in mAh/g Elektrodenmaterial, die sich nach Zyklierungen (dargestellt sind insgesamt ca. 250 Zyklen) mit unterschiedlichen C-Raten erzielen lässt. Es ist zu erkennen, dass mit zunehmender Zyklenzahl durch die erfindungsgemäßen tiefen Fluidleitstrukturen regelmäßig eine Entladekapazität enthalten wird, die größer ist als jene unstrukturierten Materials ist.

Es ist zudem erkennbar, dass eine Strukturierung zunächst regelmäßig dazu führt, dass die Entladekapazitäten über den mit einer unstrukturierten Fläche erzielbaren Entladekapazitäten liegen. Weiter ist erkennbar, dass durch die geeignete Wahl einer Strukturierung wie einer Netzstrukturierung die Entladekapazitäten noch weiter gesteigert werden können.

Typisch ist das in der Regel poröse Schichtmaterial auf einem Substrat aufgetragen in einer Dicke von ca. 100 µm.

Dies ermöglicht die Einsparung einer kostenintensiven Zell-Lagerung, von Vakuumprozessen sowie der im Stand der Technik erforderlichen nachgeschalteten zeitintensiven Temperierung der Zellen, die für eine Homogenisierung der Elektrolytbenetzung in der Elektrode durch Herabsetzung der Elektrolytviskosität erforderlich ist. Ein weiterer Vorteil der Erfindung ist die Erhöhung des Oberflächen-zu-Volumen-Verhältnisses des Aktivamterials bzw. die Erzeugung einer vergrößerten Elektrolyt-Aktivmaterial-Grenzfläche und der daraus sich ergebenden verbesserten elektrochemischen Zyklierbarkeit der Zellen insbesondere bei hohen Lade/Entladeströmen.

## Patentansprüche

1. Elektrolytbatterie-Flektrodenkompbnefile mit
einer Schicht,
an deren Oberfläche
in der Batterie Elektrolyt ansteht
und welche
mit einer Fluidleit-Kanal-Struktut versehen ist,
**dadurch gekennzeichnet, dass**
die Fluidleitstniktur Kanäle mit Kanaltiefen von zumindest 70 % der Dicke der aktiven Schicht aufweist, die ein Elektrolytreservoir nahe der aktiven Materialschicht bereitstellen.

2. Elektrolytbatterie-Elektrodenkomponente nach dem vorhergehenden Anspruch mit Schichtdicken größer 10 µm.

3. Elektrolytbatterie-Elektrodenkomponente nach einem der vorhergehenden Ansprüche, wobei die Kanalstruktur sich zumindest im Wesentlichen bis zu einem Substrat erstreckt.

4. Elektrolytbatterie-Elektrodenkomponente nach einem der vorhergehenden Ansprüche, wobei
eine Vielzahl Kanäle nebeneinander und/oder sich
kreuzend vorgesehen sind
und/oder eine sich von einer Elektrolytfluideinströmstelle verästelnde Struktur,
und/oder eine säulenartige Struktur
gebildet ist.

5. Elektrolytbatteriekomponente nach einem der vorhergehenden Ansprüche, **dadurch gekennzeichnet, dass** sie einen Separator oder eine Elektrode, insbesondere eine Kathode, bevorzugt eine Dünnschicht- und/oder pulverbasierte Elektroden bildet, insbesondere aus zumindest einem von LiNi_{1/3}Mn_{1/3}Co_{1/3}O₂, LiCoO₂, LiMn₂O₄, LiFePO₄, Graphit, sowie entsprechende Materialien mit Dotierungen.

6. Elektrolytbatteriekomponente nach einem der vorhergehenden Ansprüche, worin die Kanaltiefe zumindest 90 % der Schichtdicke beträgt.

7. Elektrolytbatteriekomponente nach dem vorhergehenden Anspruch,
**dadurch gekennzeichnet**, das
die Kanalbreite
wenigstens 35µm beträgt
und /oder
unter 150µm beträgt,
bevorzugt unter 100µm,
insbesondere bevorzugt unter 80µm,
weiter bevorzugt unter 60µm,

8. Zelle mit einer Elektrolytbatteriekomponente nach einem der vorhergehenden Ansprüche.

9. Elektrolytbatterie, insbesondere Sekundärelement mit einer Komponente nach einem der vorhergehenden Ansprüche.

10. Elektrolytbatterie nach dem vorhergehenden Anspruch mit einem wasserfreien Elektrolyt, insbesondere mit einem Lithiumsalz als Leitsalz, bevorzugt mit LiPF₆ und/oder mit einem Lösungsmittel, welches Ethylencarbonat und/oder Dimethylcarbonat, insbesondere im Verhältnis 1:1, enthalt.

11. Verfahren zur Herstellung einer Elektrolytbattenekomponente nach einem der vorhergehenden Elektrolytbatteriekomponentenansprüche, **dadurch gekennzeichnet, dass** die Strukturierung mit einer Kalanderwalze und/oder einem Prägeverfahren und/oder mit Laser vorgenommen wird.

## Claims

1. Electrolyte battery electrode component having
a layer
a surface of which is
adjoined by electrolyte in the battery
and which is provided
with a fluid-conducting channel structure,
**characterized in that**
the fluid-conducting structure has channels having channel depths of at least 70% of the thickness of the active layer that provide an electrolyte reservoir close to the active material layer.

2. Electrolyte battery electrode component according to the preceding claim having layer thicknesses greater than 10 µm.

3. Electrolyte battery electrode component according to either of the preceding claims, wherein the channel structure extends at least essentially up to a substrate.

4. Electrolyte battery electrode component according to any of the preceding claims, wherein
a multitude of channels are provided alongside one another and/or crossing one another
and/or a structure branching from an electrolyte fluid inflow site
and/or a column-like structure
is formed.

5. Electrolyte battery component according to any of the preceding claims, **characterized in that** it constitutes a separator or an electrode, in particular a cathode, preferably a thin film-and/or powder-based electrode, in particular composed of at least one of LiNi_{1/3}Mn_{1/3}Co_{1/3}O₂, LiCoO₂, LiMn₂O₄, LiFeO₄, graphite, and corresponding materials with doping.

6. Electrolyte battery component according to any of the preceding claims, in which the channel depth is at least 90% of the layer thickness.

7. Electrolyte battery component according to the preceding claim,
**characterized in that**
the channel width
is at least 35 µm
and/or
is less than 150 µm,
preferably less than 100 µm,
in particular preferably less than 80 µm,
further preferably less than 60 µm.

8. Cell having an electrolyte battery component according to any of the preceding claims.

9. Electrolyte battery, in particular secondary element, having a component according to any of the preceding claims.

10. Electrolyte battery according to the preceding claim with an anhydrous electrolyte, in particular with a lithium salt as the conductor salt, preferably with LiPF₆ and/or with a solvent containing ethylene carbonate and/or dimethyl carbonate, in particular in a ratio of 1:1.

11. Method for producing an electrolyte battery component according to any of the preceding electrolyte battery component claims, **characterized in that** the structuring is undertaken with a calender roll and/or an embossing method and/or by laser.

## Revendications

1. Composant électrode de batterie à électrolyte, comprenant :
une couche
à la surface de laquelle
un électrolyte est présent dans la batterie
et qui
est munie d'une structure de canaux conductrice de fluide,
**caractérisé en ce que**
la structure conductrice de fluide comprend des canaux ayant une profondeur de canaux d'au moins 70 % de l'épaisseur de la couche active, qui mettent à disposition un réservoir d'électrolyte à proximité de la couche de matériau actif.

2. Composant électrode de batterie à électrolyte selon la revendication précédente, ayant des épaisseurs de couche supérieures à 10 µm.

3. Composant électrode de batterie à électrolyte selon l'une quelconque des revendications précédentes, dans lequel la structure de canaux s'étend au moins essentiellement jusqu'à un substrat.

4. Composant électrode de batterie à électrolyte selon l'une quelconque des revendications précédentes, dans lequel
une pluralité de canaux sont prévus adjacents les uns aux autres et/ou se croisant,
et/ou une structure qui se ramifie à partir d'un emplacement d'entrée de l'électrolyte fluide et/ou une structure de type colonne sont formées.

5. Composant de batterie à électrolyte selon l'une quelconque des revendications précédentes, **caractérisé en ce qu'**il forme un séparateur ou une électrode, notamment une cathode, de préférence une électrode à couche mince et/ou à base de poudre, notamment à base de LiNi_{1/3}Mn_{1/3}Co_{1/3}O₂, de LiCoO₂, de LiMn₂O₄, de LiFePO₄, de graphite et/ou de matériaux correspondants contenant des dopages.

6. Composant de batterie à électrolyte selon l'une quelconque des revendications précédentes, dans lequel la profondeur des canaux est d'au moins 90 % de l'épaisseur de couche.

7. Composant de batterie à électrolyte selon la revendication précédente, **caractérisé en ce que** la largeur des canaux est
d'au moins 35 µm
et/ou
inférieure à 150 µm,
de préférence inférieure à 100 µm,
de manière particulièrement préférée inférieure à 80 µm,
de manière davantage préférée inférieure à 60 µm.

8. Cellule comprenant un composant de batterie à électrolyte selon l'une quelconque des revendications précédentes.

9. Batterie à électrolyte, notamment élément secondaire, comprenant un composant selon l'une quelconque des revendications précédentes.

10. Batterie à électrolyte selon la revendication précédente, comprenant un électrolyte anhydre, notamment comprenant un sel de lithium en tant que sel conducteur, de préférence comprenant LiPF₆, et/ou comprenant un solvant, qui contient du carbonate d'éthylène et/ou du carbonate de diméthyle, notamment en un rapport de 1:1.

11. Procédé de fabrication d'un composant de batterie à électrolyte selon l'une quelconque des revendications de composant de batterie à électrolyte précédentes, **caractérisé en ce que** la structuration est réalisée avec un cylindre de calandre et/ou un procédé de gaufrage et/ou avec un laser.
